**Europäisches Patentamt**

**European Patent Office**

**Office européen des brevets**

(19)

(11) Numéro de publication: **0 203 019 B1**

(12) **FASCICULE DE BREVET EUROPEEN**

(45) Date de publication du fascicule du brevet: **02.08.89**

(51) Int. Cl.⁴: **G01N 21/67**

(21) Numéro de dépôt: **86440028.8**

(22) Date de dépôt: **11.04.86**

(54) Procédé de détermination par spectrométrie d'émission optique de la teneur d'un acier en un élément, tel que l'aluminium, dissous et précipité.

(30) Priorité: **25.04.85 FR 8506363**

(43) Date de publication de la demande:
**26.11.86 Bulletin 86/48**

(45) Mention de la délivrance du brevet:
**02.08.89 Bulletin 89/31**

(84) Etats contractants désignés:
**AT BE CH DE GB IT LI LU NL SE**

(56) Documents cités:
**EP-A- 0 054 012
EP-A- 0 101 364
EP-A- 0 110 834
EP-A- 0 125 171
FR-A- 2 540 628
US-A- 4 111 556
US-A- 4 326 801**

(73) Titulaire: **INSTITUT DE RECHERCHES DE LA SIDERURGIE FRANCAISE (IRSID), Voie Romaine B.P. 64, F-57210 Maizières-lès-Metz(FR)**

(72) Inventeur: **Wittmann, André, 4, place du Général de Gaulle, F-57000 - Metz(FR)**
Inventeur: **Boury, Bernard, 10, rue du Général Berthélémy, F-57050 - Metz(FR)**
Inventeur: **Willay, Gérard, Route d'Ars Jussy, F-57130 - Ars-sur-Moselle(FR)**

(74) Mandataire: **Ventavoli, Roger et al, INSTITUT DE RECHERCHES DE LA SIDERURGIE FRANCAISE (IRSID) Station d'Essais Boîte Postale 64, F-57210 Maizières-lès-Metz(FR)**

ACTORUM AG

**Description**

La présente invention se rapporte à la détermination par spectrométrie d'émission optique de la teneur d'un acier en un élément, tel que l'aluminium, à l'état dissous et à l'état précipité.

La très grande majorité des aciers élaborés par coulée continue est de l'acier traité à l'aluminium. En effet, l'aluminium confère un certain nombre de propriétés mécaniques à l'acier, en particulier par son aptitude à former des nitrures permettant de contrôler la grosseur du grain. Par ailleurs, l'aluminium est un agent calmant.

L'aluminium présent dans l'acier se trouve notamment sous forme oxydée (aluminium précipité ou $Al_p$) et en solution (aluminium dissous ou $Al_d$). Pour conduire au mieux l'élaboration de l'acier, il est nécessaire de connaître rapidement la teneur en $Al_p$ pour juger de la propreté du métal et la teneur en $Al_d$ pour savoir si les fourchettes de teneur visées sont respectées.

Depuis plusieurs années, la spectrométrie d'émission optique est couramment employée pour suivre l'élaboration de la fonte et de l'acier. L'aluminium fait partie des éléments dosés par cette technique.

La spectrométrie d'émission optique consiste à soumettre un échantillon à analyser à un étincelage, à diriger l'émission optique de l'arc sur un réseau de diffraction et à recueillir sur un photomultiplicateur le faisceau lumineux de la raie dont la longueur d'onde correspond à l'élément à doser.

Selon la méthode d'intégration, le courant délivré par le photomultiplicateur est accumulé dans un condensateur pendant un certain temps puis, lorsque l'étincelage est terminé, la charge totale du condensateur est mesurée pour déterminer la concentration de l'élément à doser.

Il est apparu que le signal délivré par le spectromètre au cours d'un cycle d'étincelage est formé de composantes qui peuvent être rangées en deux groupes en fonction de leurs intensités. En effet, si on considère par exemple le cas de l'aluminium, lorsqu'à l'endroit de l'impact de l'étincelle sur l'échantillon se trouve une inclusion d'aluminium précipité, l'intensité lumineuse est beaucoup plus grande que si, à l'endroit de l'impact, il ne se trouve que de l'aluminium dissous. Cette observation a conduit à imaginer la méthode dite du tri (ou discrimination) des impulsions. Dans cette dernière méthode, la charge du condensateur d'intégration est mesurée, non pas à la fin d'un cycle d'étincelage, mais après chaque décharge élémentaire du circuit d'excitation et les valeurs mesurées sont stockées pour être exploitées ultérieurement (US-A - 4326 801).

La présente invention a pour but de fournir un procédé utilisant la méthode du tri des impulsions en spectrométrie d'émission optique pour déterminer de façon fine la teneur d'un acier en un élément, tel que l'aluminium, à l'état dissous et à l'état précipité.

Ce but est atteint grâce à un procédé selon lequel, conformément à l'invention :

- après chaque décharge élémentaire du circuit d'excitation, la charge du condensateur d'intégration, ou impulsion, est convertie sous forme d'un signal numérique représentatif de l'intensité lumineuse de la raie sélectionnée,

- au cours d'un cycle d'étincelage, on détermine le nombre d'impulsions dont l'intensité lumineuse correspondante est comprise dans chacune d'une pluralité de plages ou canaux contigus, afin d'élaborer un diagramme de fréquence d'impulsions en fonction de l'intensité lumineuse, la courbe représentative dudit diagramme présentant une partie d'allure sensiblement gaussienne du côté des intensités faibles,

- on procède au lissage de ladite courbe et on détermine la teneur en élément dissous à partir de la valeur d'intensité lumineuse correspondant au pic de la partie gaussienne de la courbe lissée, et

- on détermine la teneur en élément précipité par intégration d'une partie du diagramme de fréquence située au-delà de la partie gaussienne, du côté des intensités élevées.

L'invention sera mieux comprise à la lecture de la description faite ci-après, à titre indicatif mais non limitatif, en référence aux dessins annexés sur lesquels :

- la figure 1 est une vue très schématique d'un dispositif permettant la mise en oeuvre du procédé selon l'invention,

- la figure 2 est un profil de flambage illustrant la variation dans le temps de l'intensité lumineuse recueillie au cours d'un cycle d'étincelage,

- la figure 3 est un diagramme de fréquence illustrant la répartition du nombre des impulsions recueillies en fonction de l'intensité lumineuse correspondante, et

- la figure 4 est un organigramme illustrant des opérations effectuées au cours de la mise en oeuvre du procédé selon l'invention au moyen d'un micro-ordinateur programmé à cet effet.

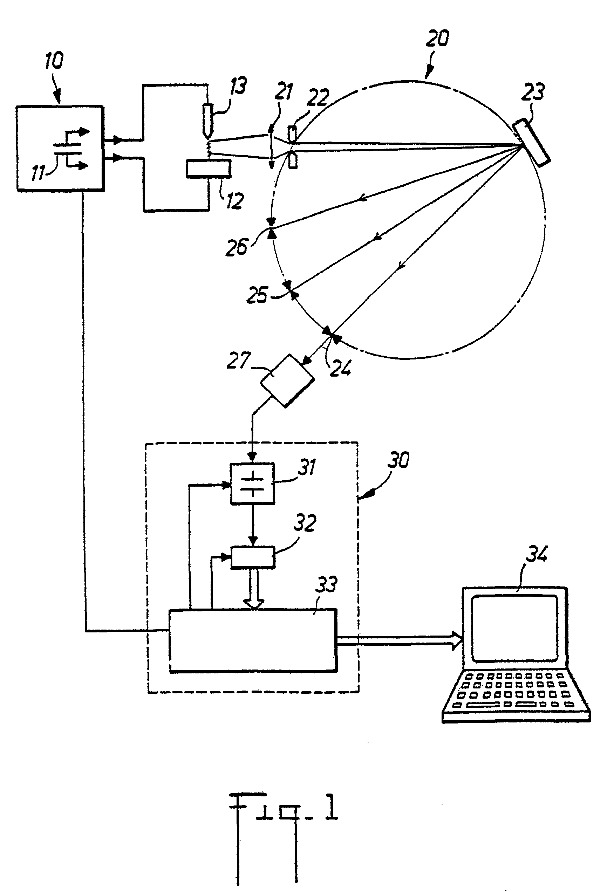

Le dispositif représenté sur la figure 1 comprend essentiellement un générateur d'étincelage 10, un dispositif optique 20 de détection des raies correspondant aux éléments à doser et un ensemble de mesure 30.

Le générateur 10 est par exemple du type de celui décrit dans la demande de brevet FR 82 13 662. Il est équipé d'un condensateur 11 à faible capacité (par exemple 3 µF). Le condensateur 11 est déchargé sous quelques centaines de volts et à une fréquence donnée pour établir une étincelle entre un échantillon 12 à analyser et une contre-électrode 13 placée à faible distance. L'échantillon 12 est en acier dont la teneur en aluminium dissous et en aluminium précipité est à mesurer. En choisissant par exemple une fréquence de décharge de 100 Hz et une durée d'un cycle d'étincelage de 20 s, le cycle est constitué de 2000 décharges élémentaires du circuit d'excitation, c'est-à-dire 2000 étincelles qui se succèdent toutes les 10 ms.

Le dispositif optique 20 comprend une lentille convergente 21 dont le foyer-objet est sur l'arc formé entre l'échantillon 12 et l'électrode 13, et une fente 22 qui recueille l'émission lumineuse de l'arc et envoie un pinceau lumineux sur un réseau de diffraction 23. Celui-ci émet un spectre de raies représentatif des constituants de l'échantillon 12. Différentes fenêtres de scrutation 24, 25, 26 sont placées en regard du réseau 23 sur un cercle qui passe par ce réseau et le centre de la fente 22. Chaque fenêtre reçoit un rayonnement d'une longueur d'onde donnée. La fenêtre 24, par exemple, est disposée de manière à recevoir le rayonnement de la raie relative à l'aluminium (longueur d'onde égale à 396,1 nm). Un tube photomultiplicateur 27 est placé derrière la fenêtre 24 pour délivrer un courant dont l'intensité représente l'intensité lumineuse du rayonnement de la raie correspondante.

Le courant en sortie du photomultiplicateur 27 charge un intégrateur 31 constitué par un condensateur de l'ensemble de mesure. Le condensateur d'intégration 31 est de très faible capacité, par exemple 100 pF.

Conformément à la méthode du "tri des impulsions", un cycle d'étincelage est partagé en séquences élémentaires consécutives comprenant, chacune :
- décharge du circuit d'excitation (condensateur 11),
- intégration dans le condensateur 31 pendant une durée d'intégration prédéterminée (par exemple 0,5 ms),
- acquisition de l'intensité de l'impulsion (charge du condensateur d'intégration 31) à la fin de la période d'intégration, conversion de l'amplitude de l'impulsion sous forme numérique, et mise en mémoire,
- remise à zéro (décharge) du condensateur d'intégration 31.

La synchronisation entre la décharge du circuit d'excitation et l'acquisition de la mesure est réalisée en commandant ces opérations au moyen de signaux dérivés tous deux de la fréquence du réseau d'alimentation en courant électrique alternatif et élaborés par une unité 33 de traitement et de commande faisant partie de l'ensemble de mesure 30.

La conversion sous forme numérique de l'amplitude de chaque impulsion est réalisée au moyen d'un convertisseur analogique-numérique 32 (par exemple de 12 bits) relié au condensateur d'intégration 31. En sortie du convertisseur, on dispose ainsi d'un signal numérique dont la valeur X est représentative de l'intensité lumineuse traduite par l'amplitude de l'impulsion recueillie.

L'histogramme correspondant à un cycle d'étincelage est enregistré dans une mémoire adressable 34 da la façon suivante.

L'échelle des intensités mesurées (c'est-à-dire 0 à 4095 pour les valeurs numériques X dans le cas d'un codage sur 12 bits) est partagée en plages ou canaux contigus de largeur prédéterminée. Les canaux sont associés à des cases respectives dans la mémoire adressable 34. L'unité de mesure 30 fonctionne sous la commande d'un micro-processeur. Lorsqu'une valeur X est disponible en sortie du convertisseur à la fin d'une période d'intégration, un programme de saisie est déclenché qui détermine le canal dans lequel se trouve la valeur X et incrémente le contenu de la case correspondante de la mémoire 34.

A la fin du cycle d'étincelage, la mémoire 34 contient donc le diagramme de fréquence des impulsions, c'est-à-dire la répartition de celles-ci en fonction de l'intensité lumineuse qu'elles représentent.

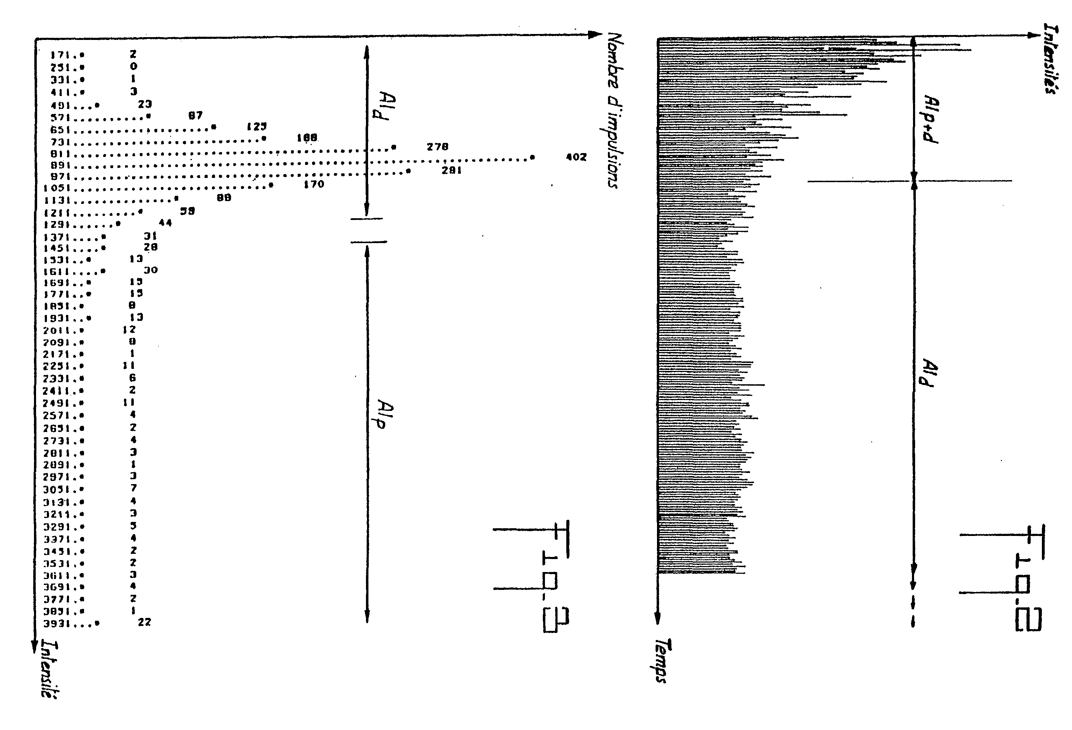

La figure 2 montre un exemple de profil de flambage, c'est-à-dire les intensités mesurées au cours de séquences élémentaires consécutives. Le profil de flambage correspond donc à la variation dans le temps, au cours du cycle d'étincelage, du signal mesuré aux bornes du condensateur d'intégration.

On constate, au début de l'étincelage, des intensités relativement élevées dues à l'impact de l'étincelle sur des inclusions d'aluminium précipité ($Al_p$) auxquelles s'ajoute la participation de l'aluminium dissous ($Al_d$). Après une première période du cycle d'étincelage, les intensités relevées traduisent l'aluminium dissous.

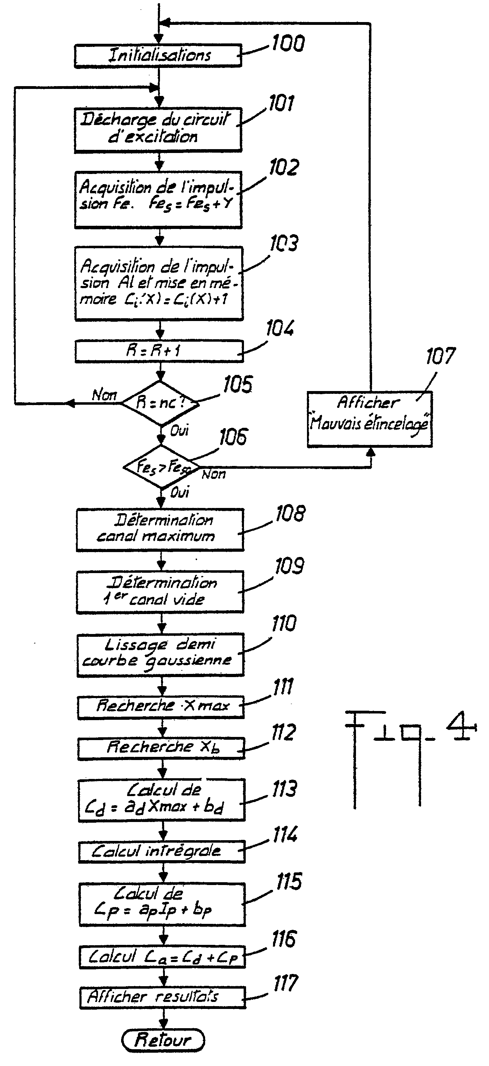

La figure 3 montre le diagramme de fréquence correspondant, tel qu'enregistré dans la mémoire 34. Dans cet exemple, l'échelle des intensités mesurées (0 à 4095) est partagée en canaux de largeur égale à 80. On constate, comme cela ressort de la figure 2, qu'une majorité d'intensités se trouve dans des canaux situés du côté des intensités faibles avec, dans cette partie du diagramme, une répartition sensiblement gaussienne due à la contribution de $Al_d$. La partie du diagramme qui se situe au-delà de cette partie d'allure gaussienne, du côté des intensités élevées, a une allure sensiblement horizontale, avec une accumulation dans le dernier canal due à la présence d'intensités hors échelle (dépassement vers le haut de l'échelle de mesure).

Conformément à l'invention, on procède au lissage de la partie gaussienne du diagramme de fréquence afin de déterminer l'emplacement du maximum. Il s'avère que cette partie gaussienne est perturbée du côté des intensités élevées par des impulsions provenant de $Al_p$. Le calcul pour le lissage de la courbe gaussienne est donc fait pour la première moitié de celle-ci, du côté des intensités faibles, l'autre moitié pouvant être déduite par symétrie. La teneur $C_d$ en $Al_d$ est ensuite calculée non pas par intégration de la partie gaussienne, mais suivant une fonction linéaire de l'intensité Xmax correspond au pic de la courbe gaussienne lissée :
$$C_d = a_d.XMax + b_d$$
Il a en effet été établi que la corrélation entre l'intensité Xmax et la teneur déterminée par analyse chimique est bonne. Cette intensité Xmax est celle correspondant au milieu du canal où se trouve le pic de la courbe lissée. Pour la détermination de la teneur $C_p$ en $Al_p$, il n'est pas possible de procéder de la même façon en raison de l'étalement du nombre des impulsions sur l'échelle des intensités au-delà de la partie gaussienne. Il faut donc recourir à la technique d'intégration. Mais la coupure entre les impulsions provenant de $Al_d$ et celles provenant de $Al_p$ n'est pas franche. Il existe une zone mixte qui comporte un certain nombre de pas sur l'échelle des intensités. Il est préférable de ne pas prendre en compte ces pas. Si l'on désigne par Xb l'intensité correspondant au point de retour à la ligne de base de la courbe gaussienne lissée, l'intégrale $I_p$ est calculée entre le canal 10 contenant ce point (ou un canal quelque peu décalé vers les intensités élevées), et la fin de la courbe de fréquence :

$$I_p = \sum_{i = Xb}^{i = N} n_i . C_i$$

où $n_i$ est la fréquence (nombre d'impulsions) et $C_i$ l'intensité pour le canal i, tandis que N est le nombre total de canaux. La concentration $C_p$ est ensuite déterminée suivant une fonction linéaire de l'intégrale $I_p$ :

$C_p = a_p.I_p$

La concentration $C_s$ en aluminium total est simplement la somme des concentrations $C_d$ et $C_p$.

L'acquisition des mesures, le traitement du diagramme de fréquence et le calcul des teneurs en aluminium sont effectués sous la commande d'un programme implanté dans l'unité 33. La figure 4 est un exemple d'organigramme illustrant les opérations relatives au traitement d'un échantillon.

Dans cet exemple, la teneur totale en fer $Fe_s$ est mesurée par intégration pour juger de la qualité de l'étincelage. Cette mesure est effectuée au moyen d'une chaîne de mesure non représentée sur la figure 1, à travers la fenêtre de scrutation dont l'emplacement correspond à la raie relative au fer.

Avant le début de l'acquisition, les contenus $C_i$ des cases de la mémoire 34 sont remis à zéro, ainsi que les paramètres k et $Fe_s$ (phase d'initialisation 100).

L'acquisition des mesures comprend, pour chaque étincelle, la commande de la décharge du circuit d'excitation (phase 101), l'acquisition de l'impulsion Y correspondant au fer, par cumul $Fe_s = Fe_s + Y$ (phase 102), l'acquisition de l'impulsion correspondant à l'aluminium et l'incrémentation du contenu de la case de la mémoire 34 correspondant au canal dans lequel se trouve l'intensité de l'impulsion recueillie $C_i (X) = C_i(X) + 1$ (phase 103), l'incrémentation du paramètre k (phase 104) et sa comparaison avec le nombre nc préenregistré de séquences élémentaires constituant un cycle d'étincelage (test 105). Lorsque k = nc, la phase d'acquisition est terminée.

Si la valeur cumulée $Fe_s$ est inférieure à une valeur de seuil prédéterminée $Fe_{so}$ (test 106), un message "mauvais étincelage" est affiché sur l'écran d'un moniteur 34 relié à l'unité 33 (phase 107) avant retour éventuel à la phase 100.

Si la valeur cumulée $Fe_s$ est correcte, le diagramme de fréquence est traité pour effectuer d'abord le lissage de la partie d'allure gaussienne. A cet effet, le canal contenant le plus grand nombre d'impulsions est d'abord déterminé (phase 108) puis, partant de ce canal, et en direction des intensités faibles, le premier canal ne contenant pas d'impulsions est recherché (phase 109). Le lissage de la partie gauche de la courbe gaussienne est ensuite effectué (phase 110) ; toute méthode de lissage de courbe connue en soi peut être utilisée (par exemple la méthode dite des "moindres carrés").

Après lissage, l'abscisse Xmax du maximum de la courbe gaussienne est déterminée par recherche du point de dérivée nulle (phase 111), ainsi que l'abscisse Xb du point de retour de la courbe à la ligne de base, du côté des intensités élevées (phase 112).

La teneur $C_d$ en $Al_d$ est calculée par

$C_d = a_d.Xmax + b_d$ (phase 113).

La partie du diagramme située au-delà de la partie gaussienne du côté des intensités élevées (c'est-à-dire au-delà de Xb) est intégrée pour fournir l'intégrale $I_p$ (phase 114) et la teneur $C_p$ en $Al_p$ est calculée par :

$C_p = a_p.I_p$ (phase 115).

Les coefficients $a_d$, $a_p$ et les valeurs $b_d$, $b_p$ sont prédéterminés par étalonnage.

La teneur $C_s$ en aluminium total peut être ensuite calculée par $C_s = C_d + C_p$ (phase 116) et les résultats sont affichés sur l'écran du moniteur 34 (phase 117) en attente d'un nouveau cycle éventuel.

## Revendications

1. Procédé de détermination par spectrométrie d'émission optique de la teneur d'un acier en un élément, tel que l'aluminium, à l'état dissous et à l'état précipité, procédé selon lequel on soumet un échantillon de l'acier à analyser à un étincelage par décharges successives d'un circuit d'excitation, on dirige l'émission optique des étincelles sur un réseau de diffraction pour séparer le rayonnement lumineux correspondant à l'élément à doser et on charge un condensateur d'intégration par un courant représentatif de l'intensité de ce rayonnement lumineux, et après chaque décharge élémentaire du circuit d'intégration, la charge du condensateur d'intégration, ou impulsion, est convertie sous forme d'un signal numérique représentatif de l'intensité lumineuse de la raie sélectionnée, et, au cours d'un cycle d'étincelage, on détermine le nombre d'impulsions dont l'intensité lumineuse correspondante est comprise dans chacune d'une pluralité de plages ou canaux contigus, afin d'élaborer un diagramme de fréquence d'impulsions en fonction de l'intensité lumineuse, la courbe représentative dudit diagramme présentant une partie d'allure sensiblement gaussienne du côté des intensités faibles, procédé caractérisé en ce que :

  — on procède au lissage de ladite courbe et on détermine la teneur en élément dissous à partir de la valeur d'intensité lumineuse correspondant au pic de la partie gaussienne de la courbe lissée, et

  — on détermine la teneur en élément précipité par intégration d'une partie du diagramme de fréquence située au-delà de la partie gaussienne, du côté des intensités élevées.

2. Procédé selon la revendication 1, caractérisé en ce que le lissage de la courbe est réalisé sur la moitié de celle-ci située du côté des intensités faibles.

3. Procédé selon l'une quelconque des revendications 1 et 2, caractérisé en ce que l'intégration de ladite partie de diagramme est réalisée au-delà du point de retour de la courbe lissée à la ligne de base.

4. Procédé selon l'une quelconque des revendications 1 à 3, caractérisé en ce que la commande de la décharge du circuit d'excitation et la commande de la lecture des impulsions recueillies sont réalisées au moyen de signaux dérivés du réseau d'alimentation en courant électrique alternatif.

5. Procédé selon l'une quelconque des revendications 1 à 4, caractérisé en ce que la teneur en élément dissous est déterminée sous forme d'une fonction linéaire de l'intensité lumineuse correspondant audit pic de la partie gaussienne de la courbe lissée.

6. Procédé selon l'une quelconque des revendications 1 à 5, caractérisé en ce que la teneur en élément précipité est déterminée sous forme d'une fonction linéaire de l'intégrale calculée par intégration de ladite partie de diagramme située au-delà de la partie gaussienne du côté des intensités élevées.

## Patentansprüche

1. Verfahren zur Bestimmung des Gehaltes eines Stahls an einem Element wie Aluminium im gelösten Zustand und im ausgefällten Zustand mittels optischer Emissionsspektrometrie, gemäß welchem Verfahren eine Probe des zu analysierenden Stahls einer Funkenerosion durch aufeinanderfolgende Entladungen eines Erregerkreises unterworfen wird, die optische Emission der Funken einem Beugungsgitter zugeleitet wird, um die dem mengenmäßig zu bestimmenden Element entsprechende Lichtstrahlung abzutrennen, ein Integrationskondensator mit einem Strom geladen wird, der der Intensität dieser Lichtstrahlung entspricht, nach jeder elementaren Entladung des Integrationskreises die Ladung des Integrationskondensators, oder Impulse, in ein numerisches Signal umgewandelt werden, das für die Intensität der gewählten Spektrallinie bzw. Strahlung repräsentativ ist, und im Verlauf eines Funkenerosionszyklus die Anzahl von Impulsen bestimmt wird, deren entsprechende Lichtintensität in jeweils einem einer Vielzahl von benachbarten Bereichen oder Kanälen enthalten ist, um ein Impulsfrequenzdiagramm in Abhängigkeit von der Lichtintensität erstellen zu können, wobei die das genannte Diagramm darstellende Kurve auf der Seite der geringen Intensität eine im wesentlichen Gaußschen Verlauf aufweist, dadurch gekennzeichnet, daß
— die genannte Kurve geglättet wird und der Gehalt an gelöstem Element ausgehend von der Lichtintensität bestimmt wird, die der Spitze des Gaußschen Abschnittes der geglätteten Kurve entspricht, und
— der Gehalt an ausgefälltem Element durch Integration eines Abschnittes des Frequenzdiagrammes bestimmt wird, der jenseits des Gaußschen Abschnittes auf der Seite der hohen Intensitäten gelegen ist.
2. Verfahren nach Anspruch 1, dadurch gekennzeichnet, daß die Glättung der Kurve auf jener Hälfte derselben durchgeführt wird, die auf der Seite der schwachen Intensitäten gelegen ist.
3. Verfahren nach Anspruch 1 und 2, dadurch gekennzeichnet, daß die Integration des genanten Diagrammabschnittes jenseits des Punktes durchgeführt wird, an dem die geglättete Kurve auf die Basislinie zurückkehrt.
4. Verfahren nach einem der Ansprüche 1 bis 3, dadurch gekennzeichnet, daß die Steuerung der Entladung des Erregerkreises und die Steuerung der Ablesung der empfangenen Impulse mittels Signalen durchgeführt wird, die vom elektrischen Wechselstrom-Versorgungsnetz abgeleitet werden.

5. Verfahren nach einem der Ansprüche 1 bis 4, dadurch gekennzeichnet, daß der Gehalt an gelöstem Element in Form einer linearen Funktion der Lichtintensität bestimmt wird, die der Spitze des Gaußschen Abschnittes der geglätteten Kurve entspricht.

6. Verfahren nach einem der Ansprüche 1 bis 5, dadurch gekennzeichnet, daß der Gehalt an ausgefälltem Element in Form einer linearen Funktion des Integrals bestimmt wird, das durch Integration des genannten Diagrammabschnittes berechnet wird, der jenseits des Gaußschen Abschnittes auf der Seite der hohen Intensitäten gelegen ist.

## Claims

1. Process for the determination, by way of optical emission spectrometry, of the content of a steel in an element, such as aluminium, in the dissolved condition and in the precipitated condition, according to which process a sample of the steel to be analysed is subjected to a spark treatment by succesive discharges of an excitation circuit, the optical emission from the sparks is directed onto a diffraction grating to separate the luminous radiation corresponding to the element to be assayed and an integrating capacitor is charged by a current representing the intensity of this luminous radiation, and, after each elementary discharge of the integrating circuit, the charge of the integrating capacitor, or pulse, is converted into the form of a digital signal representing the luminous intensity of the selected line, and, in the course of a spark treatment cycle, a determination is made of the number of pulses, the corresponding luminous intensity of which is included within each one of a plurality of contiguous channels or ranges, in order to formulate a diagram of pulse frequency as a function of the luminous intensity, the curve representing the said diagram exhibiting a part of substantially gaussian configuration on the low-intensity side, the process being characterized in that:
— the smoothing of the said curve is undertaken and a determination is made of the content of dissolved element from the luminous intensity value corresponding to the peak of the gaussian part of the smoothed curve, and
— a determination is made of the content of precipitated element by integration of a part of the frequency diagram situated beyoned the gaussian part, on the high-intensity side.
2. Process according to Claim 1, characterized in that the smoothing of the curve is undertaken on the half of the latter situated on the low-intensity side.
3. Process according to either one of Claims 1 and 2, characterized in that the integration of the said diagram part is carried out beyond the turning point of the curve smoothed at the base line.
4. Process according to any one of Claims 1 to 3, characterized in that the control of the discharge of the excitation circuit and the control of the reading of the pulses collected are carried out by means of signals derived from the network for the supply of alternating electric current.

5. Process according to any one of Claims 1 to 4, characterized in that the content of dissolved element is determined in the form of a linear function of the luminous intensity corresponding to the said peak of the gaussian part of the smoothed curve.

6. Process according to any one of Claims 1 to 5, characterized in that the content of precipitated element is determined in the form of a linear function of the integral calculated by integration of the said diagram part situated beyond the gaussian part on the high-intensity side.

Fig.1

EP 0 203 019 B1

Fig.2

Fig.3

Fig. 4

- Initialisations — 100
- Décharge du circuit d'excitation — 101
- Acquisition de l'impulsion Fe. $Fe_s = Fe_s + Y$ — 102
- Acquisition de l'impulsion Al et mise en mémoire $C_i(X) = C_i(X) + 1$ — 103
- $R = R + 1$ — 104
- $R = nc$ ? — 105 (Non / Oui)
- $Fe_s > Fe_{so}$ — 106 (Non / Oui)
- Afficher "Mauvais étincelage" — 107
- Détermination canal maximum — 108
- Détermination 1er canal vide — 109
- Lissage demi courbe gaussienne — 110
- Recherche $Xmax$ — 111
- Recherche $X_b$ — 112
- Calcul de $C_d = a_d Xmax + b_d$ — 113
- Calcul intrégrale — 114
- Calcul de $C_p = a_p I_p + b_p$ — 115
- Calcul $C_a = C_d + C_p$ — 116
- Afficher resultats — 117
- Retour